(19) Europäisches Patentamt / European Patent Office / Office européen des brevets

(11) **EP 2 380 305 B1**

(12) **FASCICULE DE BREVET EUROPEEN**

(45) Date de publication et mention
de la délivrance du brevet:
**17.08.2016 Bulletin 2016/33**

(21) Numéro de dépôt: **10700868.2**

(22) Date de dépôt: **18.01.2010**

(51) Int Cl.:
*G09C 1/00* *(2006.01)*    *H04L 9/00* *(2006.01)*
*H04L 9/06* *(2006.01)*

(86) Numéro de dépôt international:
**PCT/EP2010/050547**

(87) Numéro de publication internationale:
**WO 2010/084107 (29.07.2010 Gazette 2010/30)**

(54) **CIRCUIT DE CRYPTOGRAPHIE, PROTÉGÉ NOTAMMENT CONTRE LES ATTAQUES PAR OBSERVATION DE FUITES D'INFORMATION PAR LEUR CHIFFREMENT**

KRYPTOGRAPHIESCHALTUNG MIT SPEZIELLEM SCHUTZ VOR ANGRIFFEN INFOLGE DER BEOBACHTUNG VON INFORMATIONSLECKS DURCH CHIFFRIERUNG

CRYPTOGRAPHY CIRCUIT PARTICULARLY PROTECTED AGAINST INFORMATION-LEAK OBSERVATION ATTACKS BY THE CIPHERING THEREOF

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **20.01.2009 FR 0950342**

(43) Date de publication de la demande:
**26.10.2011 Bulletin 2011/43**

(73) Titulaire: **Institut Telecom - Telecom Paristech
75013 Paris (FR)**

(72) Inventeurs:
• **DANGER, Jean-Luc
F-92160 Antony (FR)**
• **GUILLEY, Sylvain
F-75013 Paris (FR)**

(74) Mandataire: **Lucas, Laurent Jacques
Marks & Clerk France
Conseils en Propriété Industrielle
Immeuble Visium
22, Avenue Aristide Briand
94117 Arcueil Cedex (FR)**

• **EDWARD SUH G ET AL: "Physical Unclonable Functions for Device Authentication and Secret Key Generation", DESIGN AUTOMATION CONFERENCE, 2007. DAC '07. 44TH ACM/IEEE, IEEE, PI, 1 juin 2007 (2007-06-01), pages 9-14, XP031183294, ISBN: 978-1-59593-627-1**
• **KOUICHI ITOH ET AL: "DPA Countermeasure Based on the Masking Method", PROCEEDINGS OF ICICS. INTERNATIONAL CONFERENCE ON INFORMATIONCOMMUNICATIONS AND SIGNAL PROCESSING, XX, XX, 6 décembre 2001 (2001-12-06), pages 440-456, XP002297044,**
• **MENG-DAY YU ET AL: "Secure and Robust Error Correction for Physical Unclonable Functions", IEEE DESIGN & TEST OF COMPUTERS, IEEE SERVICE CENTER, NEW YORK, NY, US, vol. 26, no. 1, 1 janvier 2010 (2010-01-01), pages 48-65, XP011288580, ISSN: 0740-7475**
• **HOUSSEM MAGHREBI ET AL: "Evaluation of countermeasure implementations based on Boolean masking to thwart side-channel attacks", SIGNALS, CIRCUITS AND SYSTEMS (SCS), 2009 3RD INTERNATIONAL CONFERENCE ON, IEEE, PISCATAWAY, NJ, USA, 6 novembre 2009 (2009-11-06), pages 1-6, XP031627503, ISBN: 978-1-4244-4397-0**

(56) Documents cités:
WO-A-00/41356       FR-A- 2 820 577
FR-A1- 2 893 796      US-A- 5 768 390
US-A1- 2005 232 430

**Description**

La présente invention concerne un circuit de cryptographie, protégé notamment contre les attaques par observation de fuites d'information par leur chiffrement.

De plus en plus de systèmes de communication et de traitement de l'information ont recours à des procédés cryptographiques pour se prémunir contre toute exaction malveillante sur les données qui sont amenées à transiter sur des médias publics. En particulier, un chiffrement assure la confidentialité des données, le résumé cryptographie assure leur intégrité et la signature électronique assure leur authenticité. Dans chacun de ces cas, un secret commun est mis en jeu entre la partie en charge de l'émission des données et la partie en charge de la réception de ces données, ces deux parties étant éventuellement confondues. Pour un attaquant hostile à ces mécanismes de sécurité, c'est-à-dire désireux de connaître illégitimement la teneur d'un message, de modifier le contenu d'une transaction, de rendre impersonnel ou de nier la provenance d'un échange, un objectif prioritaire est de retrouver le secret commun afin de bénéficier impunément de pouvoirs similaires à la partie réceptrice autorisée.

Des attaques directes contre des algorithmes de cryptographie ont été et sont toujours quelquefois possibles. Néanmoins, on observe une diminution continue des failles logiques. En particulier, de plus en plus d'algorithme de cryptographie sont standardisés après être passé au travers d'une épreuve de scrutin international. Ce fut notamment le cas pour le chiffrement symétrique AES (Advanced Encrypton Standard) à la fin des années 1990. Le même scénario se déroule actuellement pour la future version 3 de l'algorithme de hachage SHA (Secure Hash Algorithm).

Cependant, avec la nomadisation croissante des moyens de communication et de traitement de l'information, de nouvelles attaques deviennent envisageables. En observant le comportement temporel d'un système, en vitesse d'exécution, son comportant électronique, en consommation d'énergie par une attaque DPA par exemple, ou son comportement radiatif, en rayonnement magnétique par une attaque EMA par exemple, de nombreuses informations peuvent fuir. Des protections contre ces attaques sur les canaux auxiliaires ont été proposées, sur la base notamment :

- d'une dissimulation, où il s'agit de rendre la fuite constante, en l'occurrence indépendante du secret ;
- d'un masquage, où il s'agit de rendre la fuite aléatoire, c'est-à-dire imprévisible donc inexploitable.

Ces deux techniques permettent de rendre plus difficile des attaques visant à retrouver de l'information, mais elles restent néanmoins vulnérables à des attaques qui tireraient profit de défauts d'implémentation. Des exemples d'attaques DPA sont décrits dans le document de P.Kocher et al: Differential Power Analysis, In proceedings of CRYPT'99, volume 1666 of LNCS, pages 338-397, Springer-Verlag, 1999. Des exemples d'attaques EMA sont décrits dans le document de K.Gandolfi et al : Electromagnetic Analysis - Concrete Results, In CHES, volume 2162 of LNCS, pages 251-261, Springer-Verlag, 2001.

Il existe de nombreux exemples de vulnérabilité potentielles ou avérées. On peut notamment citer :

la dissimulation à base de logique différentielle (comme WDDL) peut être vulnérable à une attaque sur des différences de délais combinatoires cumulatifs entre l'une ou l'autre des phases du calcul, phase d'évaluation et phase de précharge

le masquage peut être sensible aux attaques d'ordre élevé, dite HO - DPA.

Un document US 5 768 390 divulgue un circuit de cryptographie comportant plusieurs clés.

Le document FR2893796 décrit un procédé de masquage d'un algorithme de chiffrement dans lequel chaque ronde nécessite l'utilisation de 64 masques présents dans une table la sélection du masque se faisant de façon aléatoire. Dans le document FR2893796 le masque avec tous les bits à 0 étant le masque véritable et qui ne masque pas la clé et donc correspond au calcul de chiffrement.

Un but de l'invention est notamment de contrer ces attaques, notamment du type DPA ou EMA. A cet effet, l'invention a pour objet un circuit de cryptographie comportant une clé fonctionnelle $k_c$ pour exécuter un algorithme de cryptographie, caractérisé en ce que ledit circuit comporte une deuxième clé $k_i$ indépendante de $k_c$ et propre à chaque instance dudit circuit, permettant de protéger celui-ci contre les attaques exploitant les canaux auxiliaires du circuit. Cette deuxième clé peut soit être stockée dans une unité de mémorisation dédiée ou être propre au composant.

La clé fonctionnelle $k_c$ est par exemple masquée par la deuxième clé $k_i$ en combinant les deux clés par l'opération XOR, une variable d'entrée $x$ étant chiffrée par la clé masquée $k_c \oplus k_i$.

La deuxième clé $k_i$ sert à protéger la clé $k_c$ grâce à une implémentation confidentielle.

La deuxième clé $k_i$ sert par exemple à protéger un algorithme confidentiel, notamment celui comportant un algorithme cryptographique standard personnalisé par l'encadrement de deux fonctions secrètes protégées par masquage avec la clé $k_i$.

La deuxième clé $k_i$ est par exemple créée par une fonction du type PUF (Physically Unclonable Function) ou POK (Physically Obfuscated Key).

La deuxième clé $k_i$ peut aussi être programmée après fabrication du circuit, par personnalisation, avec une valeur aléatoire unique dans une enceinte sécurisée.

Le masquage introduit par la deuxième clé $k_i$ peut être protégé contre les attaques d'ordre élevé HO-DPA.

La connaissance de la deuxième clé $k_i$, servant de clé d'implémentation unique à un circuit, permet par exemple l'utilisation une méthode de contrôle de protection à des utilisateurs privilégiés assurant ledit contrôle.

Le circuit peut être réalisé sur un circuit programmable du type FPGA.

La deuxième clé $k_i$ peut être personnalisée par le biais du fichier de programmation d'un FPGA.

Avantageusement, le circuit peut être réalisé par une implémentation logicielle.

Il comporte par exemple une troisième clé $k_b$ pour chiffrer le fichier de programmation (25) dudit circuit FPGA, ceci conférant la confidentialité du stockage externe et du transfert de la clé $k_i$ vers le FPGA.

Le cardinal de la deuxième clé $k_i$ est par exemple égal au cardinal de la clé fonctionnelle $k_c$, ceci afin de rendre l'attaque par canaux cachés sur $k_i$ plus difficile que l'attaque cryptanalytique sur $k_c$.

Le cardinal de la troisième clé $k_b$ est supérieur ou égal au cardinal de la clé fonctionnelle $k_c$.

L'algorithme de chiffrement est l'algorithme DES.

D'autres caractéristiques et avantages de l'invention apparaîtront à l'aide de la description qui suit, faite en regard de dessins annexés qui représentent :

- la figure 1, un exemple de circuit comportant une protection par masquage de la clé de l'algorithme DES.
- la figure 2, le même circuit sans masquage.
- la figure 3, un exemple de préencodage rajouté à l'algorithme de façon à protéger par masquage une implémentation.
- la figure 4, une illustration du principe de réalisation d'un circuit selon l'invention.

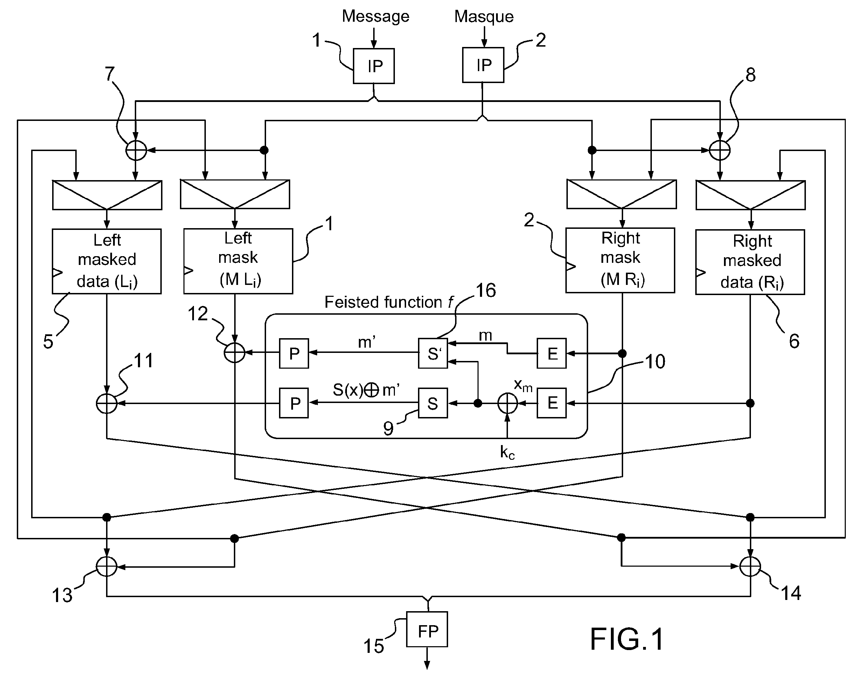

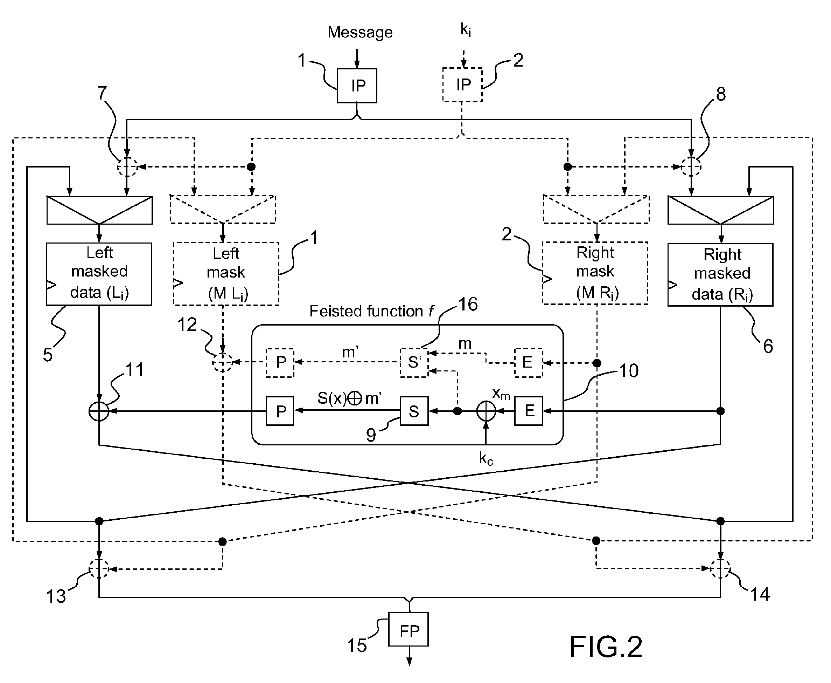

La figure 1 présente un mode de masquage auquel peut être appliqué l'invention. Plus particulièrement, la figure 1 présente à titre d'exemple une illustration du masquage de l'algorithme DES (Data Encryption Standard) implémenté notamment selon l'architecture décrite synthétiquement dans le document de S.Guilley et al : A fast Pipelined MultiMode DES Architecture Operating in IP Representation, Integration, The VLSI Journal, 40(4) pages 479-489, July 2007, DOI. Le circuit de la figure 1 est par exemple réalisé dans un circuit logique programmable de type FPGA (Field Programmable Gate Array). Dans cet algorithme, le chemin des données est scindé en deux parties, gauche et droite. A titre de comparaison la figure 2 représente le même circuit où est mis en évidence le surcoût de matériel pour assurer la protection par masquage, les circuits entraînant ce surcoût étant indiqués en traits discontinus.

Un message d'entrée 1 est donc réparti entre un registre de données gauche 3 et un registre de données droit 4. Un masque 2 est réparti entre un registre de masque gauche 5 et un registre de masque droit 6. Avant d'être stockées dans les registres de données gauche et droit, les données du message sont masquées par combinaison avec les données de masque au moyen d'une porte XOR 7 à gauche et d'une porte XOR 8 à droite. La clé de chiffrement 9, $k$, est aussi masquée par le masque $m$ par une fonction de Feistel 10. La donnée masquée du registre droit 6 et le demi-masque du registre droit 2 forment les entrées de la fonction de Feistel où la donnée masquée droite y est chiffrée par une première boîte de substitution 9 et où le demi-masque droit est chiffré par une deuxième boîte de substitution 16. Les données des registres de données gauche 5 et de masque gauche 1 sont combinées respectivement à la donnée droite et au nouveau masque, en sortie de la fonction de Feistel, au moyen de portes XOR 11, 12 puis sont ensuite rebouclées sur les registres droits, les données droite et gauche étant par la suite recombinées par des portes XOR 13, 14 pour transmettre en sortie 15 le message chiffré. Dans un circuit du type de la figure 1, seuls les registres de données 5, 6 sont supposés fuir.

Un circuit selon l'invention conserve la fuite mais la rend chiffrée, donc incompréhensible. Ainsi un attaquant réalisant par exemple une attaque de type DPA ou EMA ne trouve que la variable :

$$K \oplus M \qquad (1)$$

c'est-à-dire la clé secrète $K$ elle-même chiffrée par un masque $M$. Ce mode de protection de la clé $K$ est connue sous le nom de chiffrement de Vernam, avec l'opération « ou exclusif », encore appelée XOR, et notée $\oplus$, un code de Vernam étant un code que l'on peut chiffrer avec l'opération XOR. Un circuit de cryptographie selon l'invention est donc protégé contre les attaques sur les canaux cachés par chiffrement de Vernam des fuites d'information.

Il existe des domaines applicatifs où l'algorithme de chiffrement est complètement personnalisé. C'est le cas par exemple dans la sphère publique ou privée pour le GSM ou la télévision à péage qui s'appuient sur de la cryptographie confidentielle. Un argument habituellement mis en avant pour motiver ce choix est que les attaques sur les canaux auxiliaires, dites SCA (Side-Channel Attack), sont impossibles car la fonction de fuite à corréler avec le circuit est inconnue. Dans le document K.Tiri et al : Side-Channel Leakage Tolerant Architectures, In ITNG'06 - Proceedings of the Third International Conférence on Information Technology, New Generation, pages 204-209, Washington DC, USA, 2006 IEEE Computer Society, on propose de modifier à la fois l'implémentation et la fonctionnalité d'un algorithme, avec ou sans surcoût en quantité de matériel. Un inconvénient des deux méthodes précédentes est que le chiffrement devient fonctionnellement secret. Ceci peut être admissible dans certains cas de figure lorsque des professionnels de la sécurité mettent en oeuvre le système et son déploiement. Mais dans la grande majorité des cas, lorsque la conception et la distribution des systèmes chiffrant est difficile à surveiller, ce scénario est très incertain. Une fois la fonctionnalité du secret recouvrée, une attaque du type DPA redevient possible de façon triviale. De plus certaines politiques de certification, comme par exemple FIPS-140, exigent l'utilisation non personnalisée de standards de cryptographie, ceci rendant toutes les méthodes de tolérance aux SCA préconisées, notamment dans le document de K.Tiri et al, rédhibitoires.

Selon l'invention, pour réaliser un chiffrement, en respectant notamment entièrement la spécification fonctionnelle connue de ce chiffrement, on effectue une protection par masquage en utilisant un masque propre au circuit de cryptographie à protéger. Un circuit selon l'invention comporte une architecture de masquage où le masque $M$, propre au circuit, est simplement constant et inconnu de l'utilisateur ou du concepteur du circuit.

On peut démontrer qu'un chemin de masquage selon la figure 1 réalise bien un chiffrement de Vernam de la clé cryptographique conformément à l'équation (1) ci-dessus, dans le cadre d'une attaque DPA de premier ordre, c'est-à-dire une attaque où seuls les registres de données 5, 6 sont supposés fuir. Par ailleurs, toute variante autour du masquage peut également être utilisée pour mettre en oeuvre l'invention : il suffit en effet que l'implémentation soit exprimée différemment de l'implémentation de référence tout en conservant la fonctionnalité. Dans le cas du masquage, l'implémentation de référence correspond é celle avec un masque nul (tout 'a zéro); mais dès lors que le masque est non nul, l'implémentation change, sans pour autant modifier la fonctionnalité. Or il est aussi possible de changer de représentation pour introduire de la variabilité dans l'implémentation. Par exemple, Jean-Sébastien CORON propose dans « A New DPA Countermeasure Based on Permutation Tables. In SCN, volume 5229 of Lecture Notes in Computer Science, pages 278-292. Springer». de modifier les parties opérations élémentaires de l'AES avec l'introduction de 2 bijections 4-bit → 4-bit, de telle sorte toutefois qu'en les assemblant, elles donnent bien le calcul d'un AES classique. Ce changement de représentation peut également donner lieu à une implémentation secrète, dont la fuite d'information n'est cependant pas étudiée dans ce document.

Ainsi, les attaques en corrélation du premier ordre sont rendues impossibles car le modèle de fuite est inconnu. De plus, les attaques qui s'appuient sur la constitution d'un ensemble, ou catalogue, de mesures, comme les attaques dite « template », sont aussi rendues infaisables car chaque implémentation étant unique, il est impossible de construire un catalogue universel. Avantageusement, avec l'invention, la diversité des implémentations est comparable, voire égale, au nombre de clés cryptographiques. En particulier, l'attaque de type « seconde pré-image » est alors impossible. La probabilité de trouver par hasard un circuit dont la clé est programmable ayant le même masque qu'un circuit mise en service est comparable, voire égale, à la probabilité de deviner par hasard la bonne clé, c'est-à-dire de réussir une recherche exhaustive sur la clé par attaque en force brute.

Dans l'exemple de la figure 1, le matériel ajouté pour implémenter le masquage est formé des registres de masques gauche 1 et droit 2 et des portes XOR 12, 13, 14 combinant les masques avec les données ainsi que des circuits de substitution 16 de la fonction de Feistel traitant la sortie du registre de masque droit.

Dans le cadre d'une réalisation par ASIC ou FPGA, le masquage d'autres types de primitives cryptographiques peut être automatisé avec l'assistance d'outils de CAO adaptés opérant directement sur le code source.

Il est intéressant de noter que la méthode de protection peut s'appliquer, de manière générale à toute implémentation qui contient un secret susceptible de fuir via un canal auxiliaire. Un exemple immédiat est la protection de clés de chiffrement, mais des clés de signature sont tout aussi bien protégées de la même façon. De plus, au lieu de protéger un paramètre d'un algorithme cryptographique, on peut également protéger l'algorithme lui-même, s'il est confidentiel. Ceci arrive dans les secteurs tels que la télévision à péage, où une cryptographie non-interopérable peut être mise en oeuvre car les communications sont chiffrées de point-à-point (satellite vers décodeur). Il est alors usuel d'utiliser un algorithme standardisé en y modifiant un ou plusieurs éléments (comme les tables de substitution ou les fonctions de diffusion). De cette façon, on s'assure une personnalisation de l'algorithme sans risquer d'affaiblir sa sécurité.

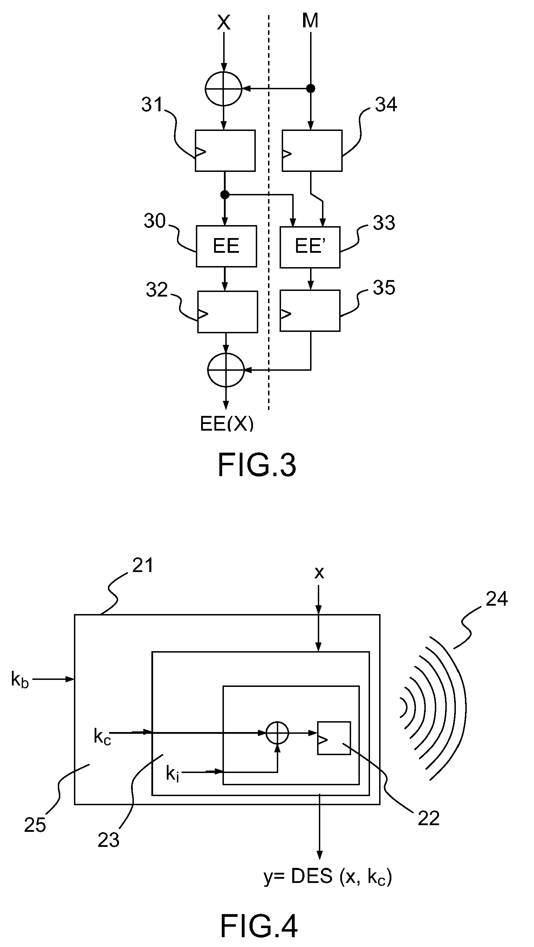

La figure 3 illustre une autre façon de procéder. Dans cet exemple, on réutilise un algorithme standard A tel quel, mais de l'encadrer par des encodages externes (EEin et EEout), de sorte que la fonction réalisée ne soit plus A, mais la composition EEout ∘ A ∘ EEin. Une explication de ce principe est donnée en introduction dans l'artcile de C. Clavier : Secret External Encodings Do Not Prevent Transient Fault Analysis, in CHES'07, volume 4727 of Lecture Notes in Computer Science, pages 181-194. La partie gauche 30, 31, 32 de la figure 3 montre comment une technique de masquage peut empêcher les valeurs EE(X) de fuir, la fonction EE 30 étant encadrée par deux registres 31, 32 où le premier registre 31 reçoit la donnée $x \oplus m$. La fonction EE' 33 disposée en parallèle, définie comme EE'(a,b).=EE(a) $\oplus$ EE(a $\oplus$ b), assure que le démasquage reste possible. Ainsi, grâce à l'ajout du matériel 33, 34, 35 représenté dans la partie droite de la figure 3, aucun des registres ne contient EE(x), quelle que soit l'entrée X de l'algorithme. De cette façon, il est impossible de remonter à une quelconque information sur l'encodage externe secret EE. Dans la suite, sans toutefois perdre en généralité, on se concentre sur le cas de figure de la protection contre la fuite d'une clé cryptographique.

Une solution du type FPGA permet avantageusement à chaque circuit d'avoir sa propre configuration, même lors d'un déploiement à grande échelle. En particulier avec une solution FPGA, il est inutile de recompiler tout un système pour modifier une valeur, comme le masque propre à un composant notamment, pour le personnaliser. Cela implique que le principe de Kerckhoffs n'est pas violé, chaque implémentation étant effectivement secrète, mais unique. La compromission d'une implémentation ne permet pas la compromission de toutes les implantations.

La rétro-conception de la fonctionnalité de certains circuits FPGA peut être rendue possible du fait qu'elle est programmée logiciellement, dans un fichier se trouvant dans une mémoire lisible en permanence. Pour éviter une telle rétro-conception, on peut utiliser un type de FPGA permettant de chiffrer ce fichier, dit de « bitstream ». Ainsi, la protection est elle-même gardée confidentielle par des moyens cryptographiques. L'obfuscation de code est une parade supplémentaire pour compliquer l'opération visant à remonter du langage machine vers une spécification de haut niveau.

La figure 4 illustre de façon schématique et simplifiée un exemple de circuit selon l'invention. Ce circuit 21, de type FPGA, fait intervenir trois clés.

Une clé fonctionnelle $k_c$ sert à implémenter le chiffrement dans le circuit 21. Ce chiffrement est par exemple l'algorithme DES 23 qui transforme une variable d'entrée $x$ en une variable cryptée $y = DES(x, k_c)$ à l'intérieur d'un registre 22.

Une clé non fonctionnelle $k_c$, sert à masquer la clé fonctionnelle $k_c$. C'est cette clé $k_i$ qui forme le masque $M$ de la clé fonctionnelle, un opérateur XOR combine ces deux clés en $k_c \oplus k_i$. La clé $k$ sert donc à protéger la clé fonctionnelle $k_c$ de l'implémentation DES contre les fuites d'information 24, par observation de rayonnement magnétique ou de consommation instantanée notamment.

Une autre clé non fonctionnelle $k_c$, sert à protéger les éléments secrets du fichier « bitstream » 25, c'est-à-dire au moins $k_i$, voirie $k_c$.

De préférence, dans ce schéma, les clés sont dimensionnées de façon à ce que :

$$\left| k_i \right| = \left| k_c \right| \qquad\qquad (2)$$

et

$$\left| k_b \right| \geq \left| k_c \right| \qquad\qquad (3)$$

$|k_i|$, $|k_b|$, $|k_c|$ exprimant respectivement le cardinal de $k_i$, de $k_b$ et de $k_c$.

Selon l'invention l'implémentation de l'algorithme cryptographie 23 est telle que la variable cryptée $y$ est fonctionnellement indépendante de la clé $k_i$ protégeant la clé de chiffrement $k_c$ de la variable, les fuites d'information de l'implantation étant aussi diverses que $2^{|k_i|}$ (2 à la puissance $|k_i|$).

Dans le cas d'un algorithme DES, $y=DES(x,k_c,k_i)$ avec $y$ indépendante fonctionnellement de $k_i$.

Il est à noter qu'une attaque du premier ordre n'est pas rendue simplement plus difficile mais impossible. Car il faut deviner $k_c$ connaissant $k_c \oplus k_i$, $k_i$ étant totalement inconnu y compris d'un utilisateur ou d'un concepteur.

En cela, l'invention apporte un haut degré de confiance, la sécurité étant prouvée contre tout adversaire ayant une force de calcul inférieure à $2^{|k_j|}$. Cela revient au niveau de sécurité de l'algorithme DES lui-même dès lors que $|k_i| = |k_c|$.

Il est possible d'utiliser une fonction de type PUF (Physically Unclonable Functions), fonctions physiquement non clonable ou POK (Physically Obfuscated Key) clé physique propre à l'implémentation, ou tout autre système permettant de générer un secret propre au circuit 21 en lieu et place d'une clé apportée de l'extérieur, via une infrastructure à clé publique, dite PKI, ou tout autre mécanisme de personnalisation de confiance.

La deuxième clé $k_i$ peut encore être programmée après fabrication du circuit avec une valeur aléatoire unique dans une enceinte sécurisée.

Il est aussi possible d'utiliser un mécanisme de masquage à masque constant, qui utilise de surcroît des contre-mesures aux attaques sur la logique combinatoire, aussi connues sous le nom de « Shallow Attack », ou contre les attaques HO-DPA.

Il est à noter que l'attaque sur le masquage algorithmique exploitant la présence de transitions non-fonctionnelles, encore appelées « glitchs », peu dépendants dans le masque secret, telle que présentée notamment dans le document de S. Mangard et al: Successfully Attacking Masked AES Hardware Implementations, In LNCS, editor, Proceedings of CHES'05, volume 3659 of LNCS, pages 157-171, Springer, September 2005, Edinburgh, Scotland, ne s'applique pas à une implementation secrète, car il est impossible de réaliser une simulation du circuit, ne le connaissant pas. En fait, cette attaque s'appuie sur une corrélation avec un modèle pré-caractérisé. Cette étape est infaisable avec un circuit selon l'invention, sauf pour un éventuel attaquant initié qui connaîtrait le dessin des masques de l'ASIC réalisé, ou le fichier « bitstream » du FPGA, ou qui disposerait d'un échantillon où le masque peut être choisi. Pour empêcher cette possibilité, on peut notamment utiliser la fonction PUF décrite précédemment.

Certains algorithmes propriétaires, en particulier les algorithmes standards encapsulés entre deux encodages secrets, ne sont pas résistants aux attaques en perturbation comme le montre notamment le document de C.Clavier : Secret External Encodings Do Not Prevent Transient Fault Analysis, In CHES, volume 4727 of Lecture Notes in Computer Science, pages 181-194, Springer, 2007. Cette classe d'attaque nécessite que l'attaquant puisse fixer la valeur d'un registre à une valeur connue, comme 0x00 par exemple. Dans un circuit protégé par une clé d'implémentation $k_i$ selon l'invention, cela est très difficile en pratique si les registres de donnée et de masque sont disjoints, car l'attaquant devrait alors réaliser des fautes multiples beaucoup plus difficiles à générer que des fautes simples.

Un type de protection selon l'invention, à clé d'implémentation $k_i$, peut avantageusement être combinée avec d'autres protections telles que par exemple les protections usuelles de détection de fautes, au niveau RTL pour le codage, ou physique pour l'encapsulation. Cela permet d'atteindre un haut niveau de protection à la fois contre les attaques passives et contre les attaques actives.

## Revendications

1. Circuit de cryptographie (21) comportant une clé fonctionnelle $k_c$ pour exécuter un algorithme de cryptographie, ledit circuit comportant une deuxième clé $k_i$, **caractérisé en ce que** ladite deuxième clé est propre à chaque instance dudit circuit, permettant de protéger celui-ci contre les attaques exploitant les canaux auxiliaires dudit circuit ;
la clé fonctionnelle $k_c$ étant masquée par la deuxième clé $k_i$ en combinant les deux clés par l'opération XOR, une variable d'entrée $x$ étant chiffrée par la clé masquée $k_c \oplus k_i$ ;
la deuxième clé $k_i$ étant créée par une fonction physiquement inclonable ou PUF.

2. Circuit selon la revendication 1, **caractérisé en ce que** le masquage introduit par la deuxième clé $k_i$ est protégé contre les attaques d'ordre élevé HO-DPA par un masquage constant.

3. Circuit selon l'une quelconque des revendications précédentes, **caractérisé en ce que** ledit circuit est réalisé sur un circuit programmable du type FPGA.

4. Circuit selon la revendication 3, **caractérisé en ce qu'**il comporte une troisième clé $k_s$ pour chiffrer le fichier de programmation (25) dudit circuit FPGA, ceci conférant la confidentialité du stockage externe et du transfert de la clé $k_i$ vers le FPGA.

5. Circuit selon l'une quelconque des revendications précédentes, **caractérisé en ce que** le cardinal de la deuxième clé $k_i$ est égal au cardinal de la clé fonctionnelle $k_c$.

6. Circuit selon l'une quelconque des revendications 4 ou 5, **caractérisé en ce que** le cardinal de la troisième clé $k_s$ est supérieur ou égal au cardinal de la clé fonctionnelle $k_c$.

7. Circuit selon l'une quelconque des revendications précédentes, **caractérisé en ce que** l'algorithme de chiffrement est l'algorithme DES.

## Patentansprüche

1. Kryptografieschaltung (21), die einen funktionellen Schlüssel $k_c$ zum Ausführen eines Kryptografiealgorithmus umfasst, wobei die Schaltung einen zweiten Schlüssel $k_i$ umfasst, **dadurch gekennzeichnet, dass** der zweite Schlüssel für jede Instanz der Schaltung spezifisch ist, so dass die Schaltung gegen Attacken unter Nutzung der zusätzlichen Kanäle der Schaltung geschützt ist, wobei der funktionelle Schlüssel $k_c$ durch den zweiten Schlüssel $k_i$ durch Kombinieren der beiden Schlüssel über eine XOR-Operation maskiert wird, wobei eine Eingangsvariable x durch den maskierten Schlüssel $k_c \oplus k_j$ verschlüsselt wird, wobei der zweite Schlüssel durch eine Physically Unclonable Function oder PUF erzeugt wird.

2. Schaltung nach Anspruch 1, **dadurch gekennzeichnet, dass** die durch den zweiten Schlüssel $k_i$ eingeführte Maskierung gegen Higher-Order-Attacken HO-DPA durch eine konstante Maskierung geschützt ist.

3. Schaltung nach einem der vorherigen Ansprüche, **dadurch gekennzeichnet, dass** die Schaltung auf einer programmierbaren Schaltung des FPGA-Typs realisiert wird.

**4.** Schaltung nach Anspruch 3, **dadurch gekennzeichnet, dass** sie einen dritten Schlüssel $k_s$ zum Verschlüsseln der Programmierungsdatei (25) der FPGA-Schaltung umfasst, was der FPGA-Schaltung Vertraulichkeit des externen Speichers und der Übertragung des Schlüssels $k_i$ verleiht.

**5.** Schaltung nach einem der vorherigen Ansprüche, **dadurch gekennzeichnet, dass** die Kardinalzahl des zweiten Schlüssels $k_i$ gleich der Kardinalzahl des funktionellen Schlüssels $k_c$ ist.

**6.** Schaltung nach einem der Ansprüche 4 bis 5, **dadurch gekennzeichnet, dass** die Kardinalzahl des dritten Schlüssels $k_s$ gleich oder größer als die Kardinalzahl des funktionellen Schlüssels $k_c$ ist.

**7.** Schaltung nach einem der vorherigen Ansprüche, **dadurch gekennzeichnet, dass** der Verschlüsselungsalgorithmus der DES-Algorithmus ist.

## Claims

**1.** A cryptography circuit (21) comprising a functional key $k_c$ for executing a cryptography algorithm, said circuit comprising a second key $k_i$, **characterised in that** said second key is specific to each instance of said circuit, allowing said circuit to be protected against attacks using the auxiliary channels of said circuit, said functional key $k_c$ being masked by said second key $k_i$ by combining the two keys via the XOR operation, an input variable x being encrypted by the masked key $k_c \oplus k_i$, said second key being created by a Physically Unclonable Function or PUF.

**2.** The circuit according to claim 1, **characterised in that** the masking that is introduced by said second key $k_i$ is protected against higher order attacks (HO-DPA) by a constant masking.

**3.** The circuit according to any one of the preceding claims, **characterised in that** said circuit is produced on a programmable circuit of the FPGA type.

**4.** The circuit according to claim 3, **characterised in that** it comprises a third key $k_s$ for encrypting the programming file (25) of said FPGA circuit, the latter conferring the confidentiality of the external storage and of the transfer of the key $k_i$ to the FPGA circuit.

**5.** The circuit according to any one of the preceding claims, **characterised in that** the cardinal of said second key $k_i$ is equal to the cardinal of said functional key $k_c$.

**6.** The circuit according to any one of claims 4 to 5, **characterised in that** the cardinal of said third key $k_s$ is greater than or equal to the cardinal of said functional key $k_c$.

**7.** The circuit according to any one of the preceding claims, **characterised in that** the encryption algorithm is the DES algorithm.

FIG.1

FIG.2

X          M

31                    34

30   EE      EE'   33

32                    35

EE(X)

# FIG.3

21                    x        24

$k_b$

$k_c$

$k_i$

22

25   23

$y= DES (x, k_c)$

# FIG.4

EP 2 380 305 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 5768390 A
- FR 2893796

### Littérature non-brevet citée dans la description

- Differential Power Analysis. **P.KOCHER et al.** proceedings of CRYPT'99. Springer-Verlag, 1999, vol. 1666, 338-397
- Electromagnetic Analysis - Concrete Results. **K.GANDOLFI et al.** CHES. Springer-Verlag, 2001, vol. 2162, 251-261
- **S.GUILLEY et al.** A fast Pipelined MultiMode DES Architecture Operating in IP Representation, Integration. *The VLSI Journal,* Juillet 2007, vol. 40 (4), 479-489
- Side-Channel Leakage Tolerant Architectures. **K.TIRI et al.** ITNG'06 - Proceedings of the Third International Conférence on Information Technology, New Generation. IEEE Computer Society, 2006, 204-209
- A New DPA Countermeasure Based on Permutation Tables. **JEAN-SÉBASTIEN CORON.** SCN, volume 5229 of Lecture Notes in Computer Science. Springer, vol. 5229, 278-292
- **C. CLAVIER.** Secret External Encodings Do Not Prevent Transient Fault Analysis. *CHES'07, volume 4727 of Lecture Notes in Computer Science,* vol. 4727, 181-194
- Successfully Attacking Masked AES Hardware Implementations. **S.MANGARD et al.** Proceedings of CHES'05. Springer, Septembre 2005, vol. 3659, 157-171
- Secret External Encodings Do Not Prevent Transient Fault Analysis. **C.CLAVIER.** CHES, volume 4727 of Lecture Notes in Computer Science. Springer, 2007, 181-194